# EUROPÄISCHE PATENTSCHRIFT

(11) **EP 3 700 696 B1**
(45) Veröffentlichungstag und Bekanntmachung des Hinweises auf die Patenterteilung: **22.06.2022**
(21) Anmeldenummer: 18792400.6
(22) Anmeldetag: 19.10.2018
(51) Int. Cl.: B22D 18/04, B22D 17/12, B30B 15/04, B29C 45/17, B29C 33/30

(54) **PRESSE FÜR EINE GIESSMASCHINE UND GIESSMASCHINE**
PRESS FOR A CASTING MACHINE AND CASTING MACHINE
PRESSE POUR UNE MACHINE DE COULÉE ET MACHINE DE COULÉE ASSOCIÉE

(30) Priorität: 23.10.2017 DE 202017106391 U
(43) Veröffentlichungstag der Anmeldung: 02.09.2020
(73) Patentinhaber: Kurtz GmbH & Co. KG, 97892 Kreuzwertheim (DE)
(72) Erfinder: HARTMANN, Lothar, 97274 Leinach (DE); BUDNIK, Yevgeniy, 97892 Kreuzwertheim (DE); MICHALSKI, René, 63811 Stockstadt/Main (DE)
(74) Vertreter: HGF
(86) Internationale Anmeldenummer: PCT/EP2018/078768
(87) Internationale Veröffentlichungsnummer: WO 2019/081377

(56) Entgegenhaltungen:
- WO-A1-2017/081026
- DE-A1- 2 557 645
- DE-A1-102008 048 393
- JP-A- H10 314 996

## Beschreibung

Die vorliegende Erfindung betrifft eine Presse für eine Gießmaschine sowie eine Gießmaschine, insbesondere eine Niederdruckgießmaschine mit einer solchen Presse.

Pressen für Gießmaschinen weisen in der Regel eine ortsfeste Basisplatte, einen ortsfesten Oberrahmen und eine dazwischen angeordnete bewegliche Aufspannplatte auf. Die Basisplatte, der Oberrahmen und die Aufspannplatte sind an ihren vier Eckbereichen jeweils an einer Säule fixiert bzw. geführt. Im Betrieb ist ein Werkzeug, eine sogenannte Kokille, zwischen der Basisplatte und der Aufspannplatte angeordnet, wobei eine untere Formhälfte der Kokille an der Basisplatte und eine obere Formhälfte an der Aufspannplatte befestigt sind. Zum Fertigen unterschiedlicher Formteile werden unterschiedliche Kokillen in der Presse angeordnet. Die maximale Breite der Kokillen ist zwangsläufig kleiner als der Abstand der zwei vorderen Säulen, damit die Kokille in die Presse eingefahren und wieder herausgefahren werden kann.

Die Pressen sind für einen vorbestimmten Druck ausgelegt, der mit dem Volumen eines in der Kokille vorgesehenen Formnestes korrespondiert. In der Praxis hat sich gezeigt, dass es auch vor allem dünne, langgestreckte Formteile gibt, die ein relativ kleines Volumen besitzen. Die Kokillen weisen dann eine Länge bzw. Breite auf, die nicht durch die vorderen Säulen passt. Eine solche Kokille kann dann mit einer solchen Presse nicht benutzt werden, obwohl die Druckkapazität der Presse zur Bearbeitung der Kokille genügen würde. Auch ist es bekannt, dass Kokillen beispielsweise Schieber aufweisen, die seitlich von der Kokille abragen. Auch wenn die Kokille selbst zwischen den vorderen Säulen hindurchpasst, kann es sein, dass die seitlich abragenden Schieber nicht mehr hindurchpassen und vor dem Werkzeugwechsel abgebaut werden müssen. Dies bedeutet einen deutlich höheren Arbeitsaufwand beim Werkzeugwechsel.

Bisher war es bei breiteren Kokillen erforderlich, Pressen zu verwenden, die einen größeren Abstand zwischen den Säulen in Breitenrichtung aufweisen. Dadurch kann die Verwendung breiterer Werkzeuge oder solcher mit seitlichen Schiebern ermöglicht werden. Allerdings vergrößert dies die Gesamtabmessungen der Presse, da beispielsweise Versorgungsleitungen und Steuereinrichtungen stets außerhalb des von den Säulen umschlossenen Raums untergebracht werden müssen und dann dahinter oder daneben oder darüber zu liegen kommen. Je nach Art des Aufbringens der Presskraft, beispielsweise wenn die Presskraft durch zwei seitliche Pressmechanismen aufgebracht wird, kann es bei Kokillen, die deutlich kleiner sind als der Abstand der Säulen, zu erhöhten Biegebeanspruchungen der beweglichen Aufspannplatte kommen.

Aus der DE 10 2015 119 243 A1 bzw. der WO 2017/081026 A1 der Anmelderin ist eine Presse für eine Gießmaschine bekannt, wobei die Presse eine ortsfeste Basisplatte, einen ortsfesten Oberrahmen und eine bewegliche Aufspannplatte umfasst, wobei an den Eckbereichen der Platten und an den Eckbereichen des Oberrahmens zwei vordere Säulen und zwei hintere Säulen angeordnet sind, die an die bewegliche Aufspannplatte mittels Führungen gekoppelt sind, und an der Basisplatte und dem ortsfesten Oberrahmen fixiert sind. Bei dieser Presse sind die vorderen Säulen lösbar an der Basisplatte und dem Oberrahmen fixiert und bzgl. der Basisplatte, dem Oberrahmen und der Aufspannplatte derart beweglich angeordnet, dass sie zumindest teilweise aus dem Bereich zwischen der Basisplatte und der beweglichen Aufspannplatte heraus bewegt werden können. Dabei können die vorderen Säulen z.B. durch Klauen wahlweise an dem Oberrahmen (Arbeitsposition) oder der beweglichen Aufspannplatte (Kokillenwechselposition) fixiert werden, sodass die vorderen Säulen bei Hochfahren der beweglichen Aufspannplatte von dieser mitgenommen werden. Hierdurch ist es möglich, eine Kokille, die länger bzw. breiter als der Abstand zwischen den vorderen Säulen ist, in den Bereich zwischen der Basisplatte und der beweglichen Aufspannplatte einzuführen bzw. herauszunehmen. Allerdings kann der Oberrahmen mit daran befestigten Bauteilen bei hochgezogenen, an dem Oberrahmen fixierten vorderen Säulen ein beträchtliches Kippmoment aufweisen und ein beträchtliches Biegemoment auf die hinteren Säulen ausüben. Zur Verringerung des Kipp- und Biegemoments kann es erforderlich sein, zwischen dem Oberrahmen und der Basisplatte einen Spannmechanismus benachbart zu den hinteren Säulen und an der von den vorderen Säulen abgewandten Seite angeordnet vorzusehen, um bei angehobenen vorderen Säulen eine Zugspannung zu erzeugen, welche das Kipp- bzw. Biegemoment kompensiert. Der Spannmechanismus kann zumindest einen Hydraulik- oder Pneumatikzylinder oder einen Spindelantrieb umfassen.

Die in der DE 10 2015 119 243 A1 vorgeschlagene Lösung ist flexibel, erfordert aber einen hohen konstruktiven und materiellen Aufwand und ist somit teurer als eine herkömmliche Presse. Zudem bedürfen die beweglichen Teile wie die Klauen der vorderen Säulen und die Teile des Zugmechanismus einer regelmäßigen Wartung und ggf. Justierung, um den reibungslosen Betrieb der Presse sicherzustellen. Auch ändern sich die Grundabmessungen der Presse nicht, sodass die Versorgungsleitungen und Steuereinrichtungen nach wie vor außerhalb des von den Säulen umschlossenen Raums vorzusehen sind.

In der DE 10 2015 119 243 A1 sind eine Presse für eine Gießmaschine sowie eine solche Gießmaschine offenbart. Die Presse umfasst eine Basisplatte, einen Oberrahmen und eine bewegliche Aufspannplatte, wobei an den Eckbereichen der Platten und an den Eckbereichen des Oberrahmens zwei vordere Säulen und zwei hintere Säulen angeordnet sind, die sich durch entsprechende Durchgangsöffnungen der beweglichen Aufspannplatte erstrecken und an der Basisplatte an dem ortsfesten Oberrahmen fixiert sind. Insbesondere ist vorgesehen, dass die vorderen Säulen derart verschieblich in der Basisplatte, dem Oberrahmen und der beweglichen Aufspannplatte angeordnet sind, dass sie zumindest teilweise aus dem Bereich zwischen der Basisplatte und der beweglichen Aufspannplatte herausbewegt werden können.

Aus der AT 308 306 B geht eine Spritzguss-Backenform hervor. Die Spritzguss-Backenform umfasst zwei Formhälften. Eine düsenseitige Formhälfte weist eine Form-Aufspannplatte und eine Formeinsatzplatte auf. Eine schließerseitige Formhälfte weist eine Formeinsatzplatte, eine Zwischenplatte, eine Stempeleinsatzplatte und eine Formaufspannplatte auf. Die schließerseitige Formhälfte umfasst weiterhin zwei Backen. Jede der Platten bis weist an den vier Eckbereichen Bohrungen auf, die zur Aufnahme von Zentrier- und Führungselementen sowie zur Aufnahme von Spannelementen dienen. Die Führung der Formhälften relativ erfolgt durch die Führungshülsen und die Führungsbolzen. Die Vorrichtung zeichnet sich dadurch aus, dass Führungselemente und Backen austauschbar sind, um unterschiedliche Formeinsatzplatten aufzunehmen.

In der US 5 066 217 A ist ein Spannmechanismus für eine Spritzgussmaschine offenbart. Ein Klemmsystem umfasst eine feste Platte, die an einem Ende einer Maschinenbasis befestigt ist und eine Mehrzahl von Klemmzylindern, wobei die feste Platte eine feststehenden Teil einer Form hält und die bewegliche Platte den beweglichen Teil der Form hält. Weiterhin sind eine Vielzahl von Verbindungsstangen vorgesehen, die sich durch die bewegliche Platte erstrecken und Kolben an ihren Enden umfassen. Die Kolben sind verschiebbar in den Klemmzylindern aufgenommen. Auf diese Weise ist die bewegliche Platte in Richtung der feststehenden Platte verschiebbar.

Aus der EP 1256396 A1 geht eine Umformpresse für eine druckmedienbasierte Umformung von Werkstücken, insbesondere für Innenhochdruckumformungen von hohlen Rohlingen, hervor. Die Umformpresse umfasst einen Kurzhubzylinder zum Schließen eines Umformwerkzeuges. Der Kurzhubzylinder weist eine Sperrbackenverriegelung für einen an dem Kurzhubzylinder angeschlossenen Spindeltrieb mit Tragspindel und Spindelmutter auf. Zwischen der Spindelmutter und entsprechenden Pressenoberholmen sind einfahrbare Sperrbacken gelagert, sodass das Umformwerkzeug während des Pressvorgangs über den Kurzhubzylinder, dem Spindeltrieb und die Sperrbacken gegen den Pressenoberholm und einen entsprechenden Pressenunterholm abgestützt ist.

In der WO 92/11991 A1 ist eine Formträgerplatte offenbart, die auf mehreren parallelen Führungsstangen gleitend gelagert ist. Die Trägerplatte umfasst ein im Wesentlichen rechteckiges vorderes Plattenelement, um ein Formelement aufzunehmen und ein im Wesentlichen rechteckiges hinteres Plattenelement. Die Platten umfassen Führungsöffnungen, sodass die vorderen und hinteren Plattenelemente gleitend auf den mehreren parallelen Führungsstangen angeordnet sind. Zudem sind mehrere Längsträger- und Querträgerelemente vorgesehen, um die beiden Plattenelemente abzustützen.

Aus der JP H10 314996 A geht eine Presse hervor, bei der zur Vergleichmässigung der Druck- und Presskraft der Presse in verschiedenen Abstand von der Pressenmitte angeordnet sind.

Der Erfindung liegt die Aufgabe zugrunde, eine Presse für eine Gießmaschine sowie eine entsprechende Gießmaschine zu schaffen, mit welcher die Druck- bzw. Presskapazität der Presse besser ausgenutzt werden kann und die dabei ebenso oder vergleichbar einfach, stabil und kompakt im Aufbau und günstig in der Herstellung und Wartung ist wie herkömmliche Pressen mit im Rechteck angeordneten Säulen.

Die Aufgabe wird durch die Gegenstände der unabhängigen Patentansprüche gelöst. Vorteilhafte Ausgestaltungen sind in den jeweiligen Unteransprüchen angegeben.

Eine erfindungsgemäße Presse für eine Gießmaschine umfasst eine ortsfeste Basisplatte, einen ortsfesten Oberrahmen und eine beweglich Aufspannplatte, wobei an den Eckbereichen der Platten und an den Eckbereichen des Oberrahmens zwei vordere Säulen und zwei hintere Säulen angeordnet sind, die an die bewegliche Aufspannplatte mittels Führungen gekoppelt sind, und an der Basisplatte und dem ortsfesten Oberrahmen fixiert sind.

Die Presse zeichnet sich dadurch aus, dass die vorderen Säulen einen größeren Abstand voneinander als die hinteren Säulen aufweisen.

Hierdurch ist es möglich, eine Kokille, die länger bzw. breiter als der Abstand zwischen den hinteren Säulen ist, in den Bereich zwischen der Basisplatte und der beweglichen Aufspannplatte einzuführen bzw. herauszunehmen. Hierdurch kann die Presskapazität der Presse besser ausgenutzt werden bzw. können Schieber beim Werkzeugwechsel am Werkzeug verbleiben. Gleichzeitig steht der Raum neben den hinteren Säulen für Versorgungsleitungen und Steuereinrichtungen zur Verfügung, so dass diese nicht oder nicht so weit über das durch den Abstand der vorderen Säulen definierte Seitenmaß der Presse hinausragen. Da die hinteren Säulen weiterhin eng beieinander stehen, ist die mittlere Breite der beweglichen Aufspannplatte kleiner als bei verbreitertem Säulenabstand auch der hinteren Säulen. Die bewegliche Aufspannplatte kann daher steifer sein.

In Ausführungsformen kann ein Winkel zwischen einer Beschickungsrichtung zum Beschicken der Presse mit einer Kokille von vorn durch die zwei vorderen Säulen (4) und einer Verbindungslinie zwischen Achsen einer jeweiligen hinteren Säule und vorderen Säule wenigstens 10°, insbesondere wenigstens 30° und/oder höchstens 60°, insbesondere höchstens 45° betragen.

Die Führungen der Aufspannplatte zum Führen an den Säulen können Durchgangsöffnungen in der Aufspannplatte sein. Sie können jedoch auch als außerhalb von der Aufspannplatte angeordnete Führungselemente ausgebildet sein. Solche Führungen können mehrere Rollen umfassen, die an einer an der Aufspannplatte befestigten Lagerung drehbar gelagert sind und an den Säulen anliegen, so dass die Aufspannplatte mittels der Rollen an den Säulen abrollen kann.

Die Presse ist vorzugsweise eine vertikale Presse, das heißt, dass die Säulen vertikal angeordnet sind.

Vorzugsweise ist am Oberrahmen ein Hubmechanismus angeordnet, an den die bewegliche Aufspannplatte gekoppelt ist, so dass die bewegliche Aufspannplatte vertikal bewegt werden kann.

Vorzugsweise ist die bewegliche Aufspannplatte aus einem Aufspannrahmen und einer daran schwenkbar befestigten Schwenkplatte ausgebildet. Ein Schwenkgelenk zwischen dem Aufspannrahmen und der Schwenkplatte ist im Bereich benachbart zu den vorderen Säulen angeordnet, so dass die Schwenkplatte bezüglich des Aufspannrahmens nach unten und vorne schwenkbar ist. Hierdurch kann eine Formhälfte der Kokille, die an der Schwenkplatte befestigt ist, in der Presse derart geschwenkt werden, dass eine durch die Formhälfte begrenzte Formfläche einfach zugänglich ist und deshalb einfach gereinigt werden kann.

Eine erfindungsgemäße Gießmaschine weist eine oben beschriebene Presse auf, wobei der Bereich zwischen der Basisplatte und der beweglichen Aufspannplatte zum Aufnehmen einer Kokille ausgebildet ist. Die Gießmaschine ist vorzugsweise eine Niederdruckgießmaschine.

Die erfindungsgemäße Presse ist für Gießmaschinen vorgesehen und entwickelt worden. Eine solche Presse kann jedoch auch für andere Anwendungen vorgesehen werden, bei welchen zu pressende Objekte zwischen zwei Pressplatten (hier: Basisplatte und bewegliche Aufspannplatte) anzuordnen sind, die eine Größe besitzen, die größer als der Abstand der beiden vorderen Säulen ist.

Die Basisplatte und die Aufspannplatte können auch als rahmenartige Elemente ausgebildet sein. Wesentlich ist, dass sie derart ausgebildet sind, dass ein dazwischen befindlicher Gegenstand mit einer gewünschten Presskraft beaufschlagbar ist. Ob die Presskraft punktuell oder flächig übertragen wird hängt von der jeweiligen Anwendung ab.

Die Erfindung wird nachfolgend beispielhaft näher anhand der Zeichnung erläutert. Die Zeichnung zeigt in:
- Figur 1: ein Ausführungsbeispiel einer Gießmaschine mit Presse in perspektivischer Ansicht,
- Figur 2: eine Draufsicht der Gießmaschine von Figur 1 im Bereich der Presse,
- Figur 3: eine Ansicht gemäß Figur 1 mit Anbauteilen und gekippter Platte, und

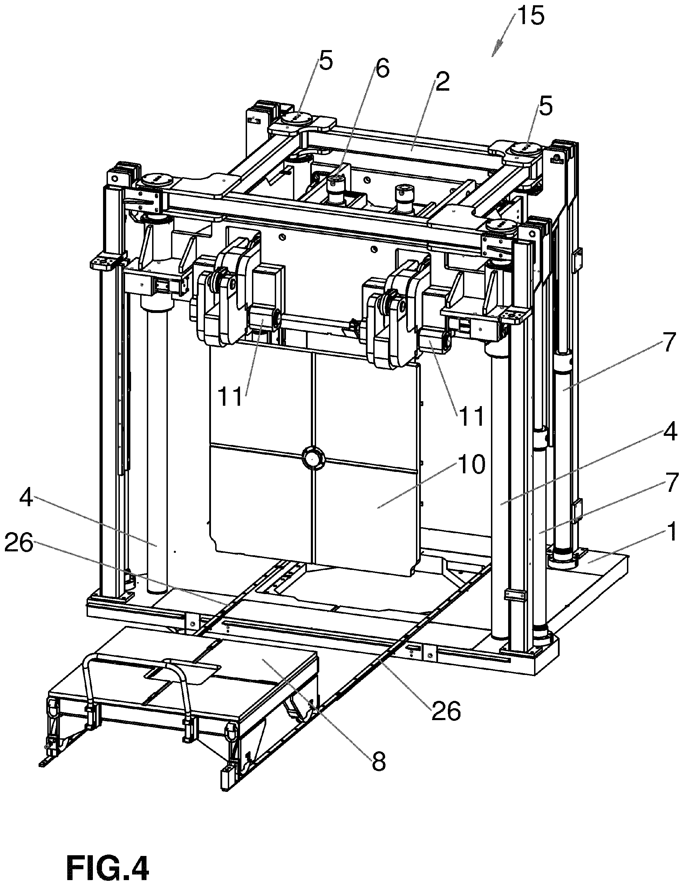

- Figur 4: eine vergrößerte Ansicht der Gießmaschine von Figur 1 im Bereich der Presse mit gekippter Platte.

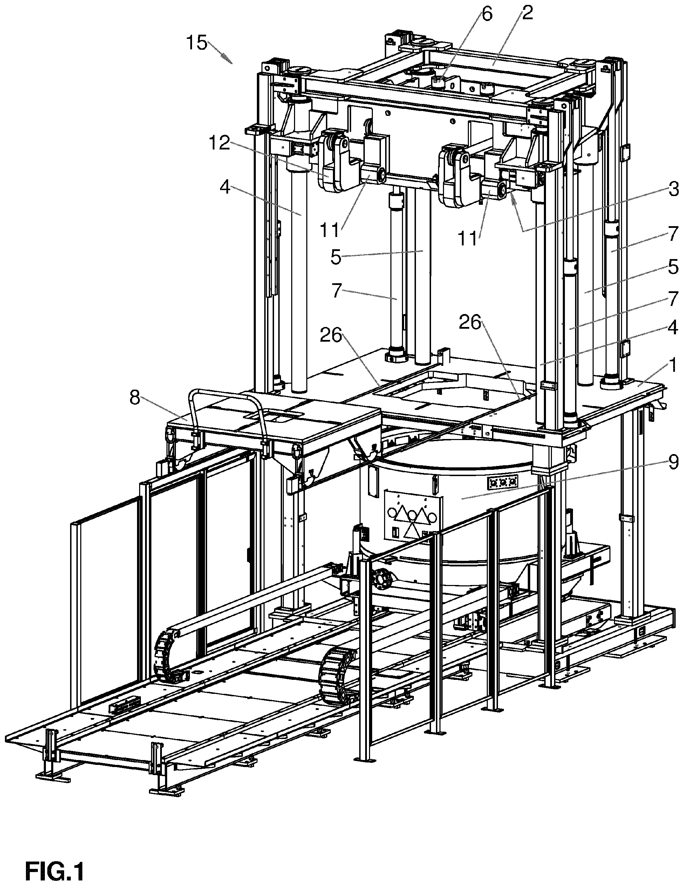

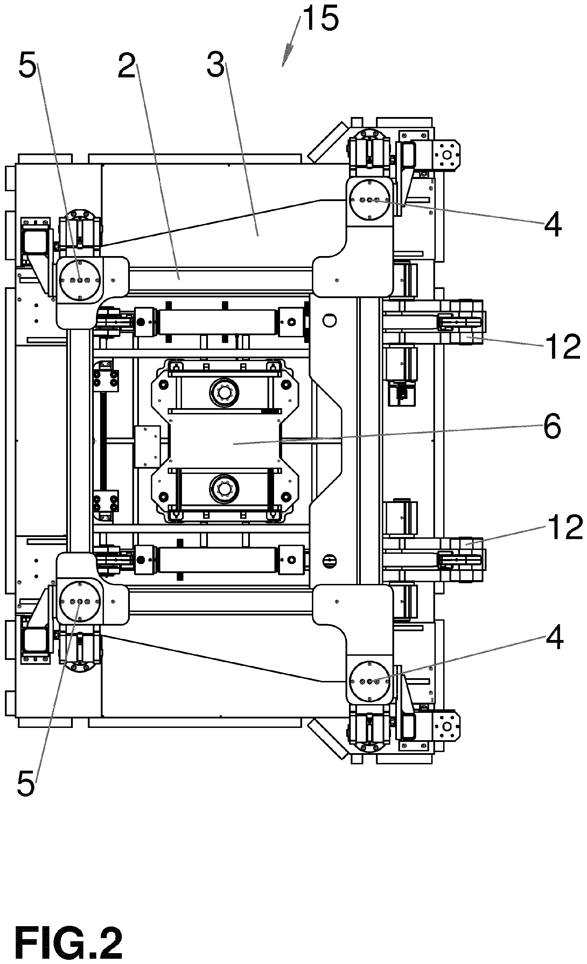

Eine erfindungsgemäße Gießmaschine 15 weist eine horizontal angeordnete Basisplatte 1, einen Oberrahmen 2 und eine dazwischen angeordnete bewegliche Aufspannplatte 3 auf. An den Eckbereichen der Platten 1, 3 und des Oberrahmens 2 sind zwei vordere Säulen 4 und zwei hintere Säulen 5 vorgesehen, welche sich grundsätzlich von der Basisplatte 1 bis zum Oberrahmen 2 erstrecken und diese auf Abstand halten (Fig. 1 und Fig. 2). Die Basisplatte 1, der Oberrahmen 2 und die bewegliche Aufspannplatte 3 sind zueinander parallel angeordnet.

Die Säulen 4, 5 erstrecken sich durch entsprechende Durchgangsöffnungen in der beweglichen Aufspannplatte 3 und dienen zum Führen der beweglichen Aufspannplatte 3, so dass die bewegliche Aufspannplatte 3 immer parallel zur Basisplatte 1 und zum Oberrahmen 2 angeordnet ist. Die Durchgangsöffnungen in der beweglichen Aufspannplatte 3 bilden Führungen zum Führen der Säulen 4, 5 relativ zur Aufspannplatte 3.

Die Basisplatte 2 und die bewegliche Aufspannplatte 3 sind als plattenförmiges Element ausgebildet. Sie können jedoch auch als rahmenförmiges Gestell ausgebildet sein. In dem in Figur 1 aufgezeigten Ausführungsbeispiel ist der Oberrahmen 2 als rahmenförmiges Gestell ausgebildet. Der Oberrahmen 2 kann jedoch auch als plattenförmiges Element ausgebildet sein.

Ein Hubmechanismus weist im vorliegenden Ausführungsbeispiel vier Hydraulikzylinder 7 auf, welche benachbart zu den Säulen 4 angeordnet sind. Der Hubmechanismus kann auch zentral am Oberrahmen 2 angeordnet sein und mit der beweglichen Aufspannplatte 3 verbunden sein.

Ein Auswerfmechanismus 6 ist an der Aufspannplatte 3 angeordnet und weist einen oder mehrere Hydraulikzylinder auf, mit welchen eine Auswerfplatte und daran angeordnete Auswerfbolzen zum Auswerfen eines hergestellten Formteils aus einer Kokille betätigbar sind.

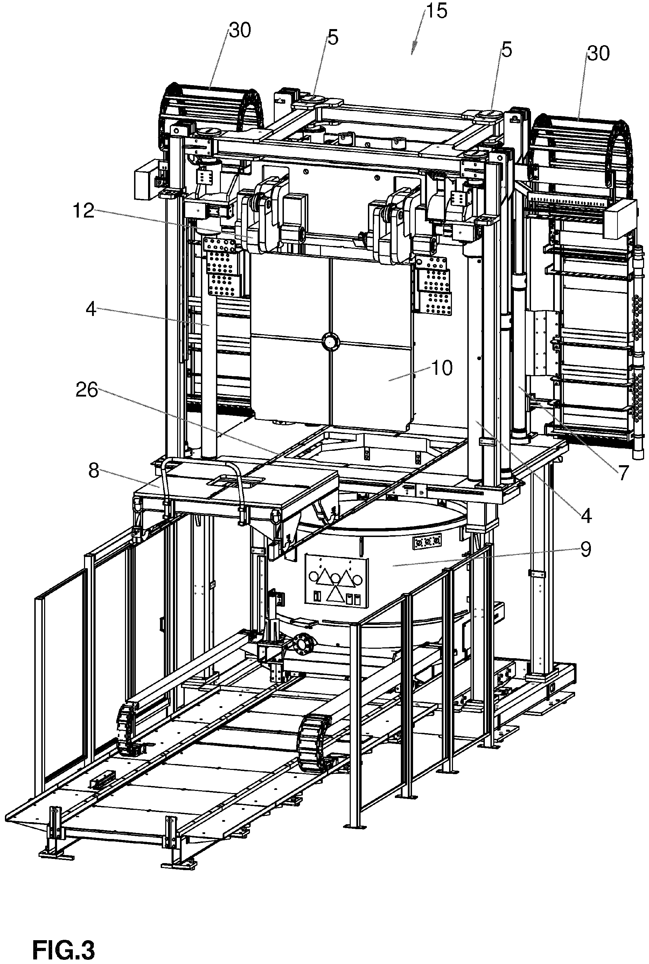

Zwei Versorgungsblöcke 30 mit Versorgungsleitungen und dergleichen sind jeweils seitlich der hinteren Säulen 5 angeordnet. Figur 3 zeigt vom Versorgungsblock 30 lediglich die jeweiligen Leitungsketten. Die Versorgungsblöcke 30 weisen eine Vielzahl von elektrischen hydraulischen Leitungen auf, welche zur einfachen Darstellung der Vorrichtung in Figur 3 weggelassen sind. Die Versorgungsblöcke 30 ragen von vorn gesehen nicht oder nur geringfügig über die vordere Breite der Presse, die durch die vorderen Säulen 4 vorgegeben ist, hinaus. Die Versorgungsleitungen sind vor allem hydraulische Leitungen und elektrische Leitungen, mit welchen die einzelnen Komponenten der Gießmaschine 15 angesteuert werden können. Weiterhin können die Versorgungsleitungen auch Medienleitungen zum Leiten von Kühlmedien zum Kühlen einer Kokille umfassen.

Auf der Basisplatte 1 sind Schienen 26 vorgesehen, die sich von einem vorderen Rand der Basisplatte 1 zu einem hinteren Rand der Basisplatte 1 erstrecken. Die Schienen 26 können auch nach vorne über den vorderen Rand hinaus verlängert sein. Die Schienen 26 dienen zum Führen eines Wagens 8, mit welchen die Kokillen in die Presse eingefahren bzw. wieder herausgefahren werden können.

An der beweglichen Aufspannplatte 3 kann eine Schwenkplatte 10 mittels eines Schwenkgelenks 11 befestigt sein. Diese Schwenkplatte 10 dient zum Halten einer oberen Formhälfte der Kokille, welche an der Schwenkplatte mit geeigneten Befestigungsmechanismen befestigbar ist. Die Schwenkplatte ist mit einem hydraulischen Schwenkmechanismus 12 versehen, mit welchem eine Schwenkbewegung der Schwenkplatte bezüglich der beweglichen Aufspannplatte 3 gesteuert werden kann.

Die Schwenkgelenke 11, mit welchen die Schwenkplatte 10 an der beweglichen Aufspannplatte 3 befestigt ist, erstrecken sich mit ihrer Schwenkachse entlang einer Verbindungslinie der beiden vorderen Säulen 4, oder sie sind mit ihren Schwenkachsen benachbart und parallel zu einer solchen Verbindungslinie angeordnet. Hierdurch kann die Schwenkplatte 10 mit der oberen Formhälfte der Kokille derart von der beweglichen Aufspannplatte 3 nach unten geschwenkt werden, dass die obere Formhälfte mit ihrer Innenfläche etwa im Bereich zwischen den vorderen Säulen angeordnet ist. Dies erlaubt einen einfachen Zugang zum Innenbereich der oberen Formhälfte beim Reinigen derselben. Da die vorderen Säulen 4 einen großen Abstand aufweisen, kann eine entsprechend große obere Formhälfte in dem Bereich zwischen den beiden Säulen 4 geschwenkt werden.

Das Einsetzen einer Kokille wird bei der Gießmaschine in an sich bekannter Weise ausgeführt:
In der Gießmaschine befindet sich zunächst keine Kokille.

Nachdem die Kokille in die Gießmaschine 15 hinein gefahren worden ist, wird die bewegliche Aufspannplatte 3 auf die Kokille abgesenkt und die Kokille an der Aufspannplatte befestigt. Die beiden Formhälften der Kokille sind miteinander verblockt.

Die bewegliche Aufspannplatte 3 wird wieder ein Stück angehoben, wodurch die Kokille vom Wagen 8 abgehoben wird. Der Wagen 8 ist somit frei und kann aus der Gießmaschine 15 entlang der Schienen 26 heraus gefahren werden.

Nachdem der Wagen 8 entfernt worden ist, wird die Aufspannplatte 3 zusammen mit der Kokille abgesenkt, bis die Kokille auf der Basisplatte 1 aufliegt. Die Basisplatte 1 kann mit Zentrierelementen versehen sein, so dass die Kokille beim Absenken automatisch korrekt positioniert wird. Solche Zentrierelemente sind bspw. als Nutensteine ausgebildet. Diese Zentrierelemente bzw. Nutensteine können auch in unterschiedlichen Anordnungen auf unterschiedlichen Basisplatten vorgesehen sein, um eine Kodierfunktion auszuüben. Hierdurch kann sichergestellt werden, dass in eine bestimmte Gießmaschine 15 nur eine Kokille eingesetzt wird, die hierfür auch vorgesehen ist.

Die Kokille wird auf der Basisplatte fixiert und steht damit für Gießvorgänge zur Verfügung.

Beim Niederdruckgießverfahren ist ein unterhalb der Basisplatte 1 angeordneter Ofen 9 vorgesehen, der mittels einer Steigleitung, die sich durch die Basisplatte 1 erstreckt, in die Kokille mündet und von unten die Kokille mit Schmelze versorgt (Fig. 1).

Die obere Formhälfte der Kokille kann bei Bedarf, z.B. bei Reinigungsarbeiten, mit der beweglichen Aufspannplatte 3 angehoben und mittels des Schwenkgelenks 11 und der Schwenkplatte 10 so geschwenkt werden, dass ihre Innenfläche einfach zugänglich ist.

Das Entfernen der Kokille aus der Gießmaschine erfolgt umgekehrt wie das Einsetzen der Kokille, indem zunächst die Kokille angehoben, ein Wagen 8 eingefahren und die Kokille auf dem Wagen 8 abgesetzt wird, um dann den Wagen 8 mit der Kokille aus der Gießmaschine zu fahren.

Durch den größeren Abstand der vorderen Säulen 4 können Kokillen in der Gießmaschine verwendet werden, die größer als der Abstand der hinteren Säulen 5 sind. Die erfindungsgemäße Gießmaschine 15 ist daher wesentlich flexibler bezüglich der einzusetzenden Kokillen als herkömmliche Gießmaschinen und ist gleichzeitig ebenso einfach und vergleichbar leicht und dennoch stabil aufgebaut.

Die Kokillen wiegen oftmals mehr als 10 t und können bis zu 40 t schwer sein.

Die Erfindung kann folgendermaßen kurz zusammengefasst werden:
Die Erfindung betrifft eine Presse für eine Gießmaschine und eine Gießmaschine mit einer solchen Presse. Die Presse weist eine Basisplatte, einen Oberrahmen und eine bewegliche Aufspannplatte auf, wobei an den Eckbereichen der Platten und an den Eckbereichen des Oberrahmens zwei vordere Säulen und zwei hintere Säulen angeordnet sind, die sich durch entsprechende Durchgangsöffnungen in der beweglichen Aufspannplatte erstrecken und an der Basisplatte an dem ortsfesten Oberrahmen fixiert sind. Die Presse zeichnet sich dadurch aus, dass die vorderen Säulen einen größeren Abstand voneinander aufweisen als die hinteren Säulen. Hierdurch können an sich breitere bzw. längere Kokillen oder solche mit seitlich abragenden Schiebern bis zu einer Breite, die dem vergrößerten Abstand der vorderen Säulen entspricht, in den Bereich zwischen der Basisplatten und der beweglichen Aufspannplatte eingeführt und wieder herausgenommen werden. Dadurch kann die Druck- bzw. Presskapazität der Presse besser ausgenutzt werden, wobei die Presse ebenso oder vergleichbar einfach, stabil und kompakt im Aufbau und günstig in der Herstellung und Wartung ist wie herkömmliche Pressen mit im Rechteck angeordneten Säulen.

### Bezugszeichen

- 1: Basisplatte
- 2: Oberrahmen
- 3: bewegliche Aufspannplatte
- 4: vordere Säule
- 5: hintere Säule
- 6: Auswerfmechanismus
- 7: Hydraulikzylinder
- 8: Wagen
- 9: Ofen
- 10: Schwenkplatte
- 11: Schwenkgelenk
- 12: Schwenkmechanismus
- 15: Gießmaschine
- 26: Schiene
- 30: Versorgungsblock

## Patentansprüche

1. Presse für Gießmaschine umfassend
eine ortsfeste Basisplatte (1), einen ortsfesten Oberrahmen (2) und eine bewegliche Aufspannplatte (3), wobei an den Eckbereichen der Platten (1, 3) und an den Eckbereichen des Oberrahmens (2) zwei vordere Säulen (4) und zwei hintere Säulen (5) angeordnet sind, die an die bewegliche Aufspannplatte (3) mittels Führungen gekoppelt sind, und an der Basisplatte (1) und dem ortsfesten Oberrahmen (2) fixiert sind,
**dadurch gekennzeichnet,**
**dass** die vorderen Säulen (4) einen größeren Abstand voneinander als die hinteren Säulen (5) aufweisen.

2. Presse nach Anspruch 1,
**dadurch gekennzeichnet,**
**dass** die Säulen (4) in der Draufsicht ein Trapez aufspannen.

3. Presse nach Anspruch 1 oder 2,
**dadurch gekennzeichnet,**
**dass** ein Winkel zwischen einer Beschickungsrichtung zum Beschicken der Presse mit einer Kokille von vorn durch die zwei vorderen Säulen (4) und einer Verbindungslinie zwischen Achsen einer jeweiligen hinteren Säule und vorderen Säule wenigstens 10°, insbesondere wenigstens 30° beträgt.

4. Presse nach einem der Ansprüche 1 bis 3,
**dadurch gekennzeichnet,**
**dass** ein Winkel zwischen einer Beschickungsrichtung zum Beschicken der Presse mit einer Kokille von vorn durch die zwei vorderen Säulen (4) und einer Verbindungslinie zwischen Achsen einer jeweiligen hinteren Säule und vorderen Säule höchstens 60°, insbesondere höchstens 45° beträgt.

5. Presse nach einem der vorstehenden Ansprüche,
**dadurch gekennzeichnet,**
**dass** ein Hubmechanismus (7) zum Bewegen der beweglichen Aufspannplatte (3) vorgesehen ist.

6. Presse nach einem der vorstehenden Ansprüche,
**dadurch gekennzeichnet,**
**dass** die bewegliche Aufspannplatte (3) aus einem Aufspannrahmen und einer daran schwenkbar befestigten Schwenkplatte (10) ausgebildet ist, wobei ein Schwenkgelenk (11) zwischen dem Aufspannrahmen und der Schwenkplatte (10) im Bereich benachbart zu den vorderen Säulen (4) angeordnet ist, so dass die Schwenkplatte (10) bezüglich der beweglichen Aufspannplatte (3) nach unten und vorne schwenkbar ist.

7. Gießmaschine mit einer Presse nach einem der vorstehenden Ansprüche, wobei die Basisplatte (1) zum Aufnehmen einer Kokille ausgebildet ist.

8. Gießmaschine nach Anspruch 7,
**dadurch gekennzeichnet,**
**dass** die Gießmaschine einen Auswerfmechanismus (6) aufweist.

## Claims

1. A press for a casting machine, comprising
a stationary base plate (1), a stationary upper frame (2) and a movable clamping plate (3), wherein two front columns (4) and two rear columns (5) are arranged at the corner areas of the plates (1, 3) and at the corner areas of the upper frame (2), which front and rear columns are coupled to the movable clamping plate (3) by means of guides and fixed on the base plate (1) and the stationary upper frame (2),
**characterized in that**
the front columns (4) are further spaced apart from each other than the rear columns (5).

2. The press according to claim 1,
**characterized in that**
the columns (4) form a trapezoid as seen in top view.

3. The press according to claim 1 or 2,
**characterized in that**
an angle between a loading direction for loading the press with a permanent mold from the front from the front through the two front columns (4) and a junction line between axes of a respective rear column and front column is at least 10°, in particular at least 30°.

4. The press according to any of the claims 1 to 3,
**characterized in that**
an angle between a loading direction for loading the press with a permanent mold from the front from the front through the two front columns (4) and a junction line between axes of a respective rear column and front column is at most 60°, in particular at most 45°.

5. The press according to any of the preceding claims,
**characterized in that**
a lifting mechanism (7) is provided for moving the movable clamping plate (3).

6. The press according to any of the preceding claims,
**characterized in that**
the movable clamping plate (3) is formed from a clamping frame and a swivel plate (10) pivotally fastened to it, a pivot joint (11) being arranged between the clamping frame and the swivel plate (10) in the area adjacent to the front columns (4), so that the swivel plate (10) can be pivoted downward and forward with respect to the movable clamping plate (3).

7. A casting machine comprising a press according to any of the preceding claims, wherein the base plate (1) is designed for receiving a permanent mold.

8. The casting machine according to claim 7,
**characterized in that**
the casting machine comprises an ejection mechanism (6).

## Revendications

1. Presse pour une machine de coulée comprenant
une plaque de base fixe (1), un cadre supérieur fixe (2) et une plaque de serrage mobile (3), dans laquelle deux colonnes avant (4) et deux colonnes arrière (5) sont disposées dans les zones d'angle des plaques (1, 3) et dans les zones d'angle du cadre supérieur (2), lesquelles sont couplées à la plaque de serrage mobile (3) au moyen de guides et sont fixées à la plaque de base (1) et au cadre supérieur fixe (2),
**caractérisée en ce que**
les colonnes avant (4) sont plus éloignées l'une de l'autre que les colonnes arrière (5).

2. Presse selon la revendication 1,
**caractérisée en ce que**
les colonnes (4) forment un trapèze en vue de dessus.

3. Presse selon la revendication 1 ou 2,
**caractérisée en ce que**
un angle entre une direction de chargement pour charger la presse avec une lingotière depuis l'avant à travers les deux colonnes avant (4) et une ligne de jonction entre les axes d'une colonne arrière et d'une colonne avant respectives est au moins de 10°, en particulier au moins de 30°.

4. Presse selon l'une quelconque des revendications 1 à 3,
**caractérisé en ce que**
un angle entre une direction de chargement pour charger la presse avec une lingotière depuis l'avant à travers les deux colonnes avant (4) et une ligne de jonction entre les axes d'une colonne arrière et d'une colonne avant respectives est au plus de 60°, en particulier au plus de 45°.

5. Presse selon l'une quelconque des revendications précédentes,
**caractérisée en ce que**
un mécanisme de levage (7) est prévu pour déplacer la plaque de serrage mobile (3).

6. Presse selon l'une quelconque des revendications précédentes,
**caractérisée en ce que**
la plaque de serrage mobile (3) est formée à partir d'un cadre de serrage et d'une plaque pivotante (10) qui est fixée de manière pivotante sur celui-ci, une articulation pivotante (11) étant disposée entre le cadre de serrage et la plaque pivotante (10) dans la zone adjacente aux colonnes avant (4), de telle sorte que la plaque pivotante (10) peut pivoter vers le bas et vers l'avant par rapport à la plaque de serrage mobile (3).

7. Machine de coulée comprenant une presse selon l'une quelconque des revendications précédentes, dans laquelle la plaque de base (1) est conçue pour recevoir une lingotière.

8. Machine de coulée selon la revendication 7,
**caractérisée en ce que**
la machine de coulée comporte un mécanisme d'éjection (6).
